## Europäisches Patentamt
## European Patent Office
## Office européen des brevets

(19)

(11) Veröffentlichungsnummer: **0 268 029 B1**

(12)
# EUROPÄISCHE PATENTSCHRIFT

(45) Veröffentlichungstag der Patentschrift: **01.07.92**

(51) Int. Cl.5: **G01N 21/86**, G01N 21/57, G01N 33/34, G01B 11/06

(21) Anmeldenummer: **87112509.2**

(22) Anmeldetag: **28.08.87**

(54) **Verfahren zur Messung von Beschichtungsmengen, insbesondere von Silikon-Beschichtungen auf Papier oder Kunststoffolie.**

(30) Priorität: **14.11.86 DE 3638932**

(43) Veröffentlichungstag der Anmeldung:
**25.05.88 Patentblatt 88/21**

(45) Bekanntmachung des Hinweises auf die Patenterteilung:
**01.07.92 Patentblatt 92/27**

(84) Benannte Vertragsstaaten:
**AT BE CH DE ES FR GB GR IT LI LU NL SE**

(56) Entgegenhaltungen:
**US-A- 2 246 501**
**US-A- 3 413 474**
**US-A- 3 631 526**
**US-A- 3 732 016**

**WOCHENBLATT FUER PAPIERFABRIKATION**
**Heft 6, 1969, Seiten 186-192; E. LIEBERT:**
**"Messung des Glanzes von weissen Papieren"**

(73) Patentinhaber: **KÄMMERER GMBH**
**Römereschstrasse 33**
**W-4500 Osnabrück(DE)**

(72) Erfinder: **Reinhardt, Bernd, Dr.-Ing.**
**Bohnenkampstrasse 24**
**W-4500 Osnabrück(DE)**
Erfinder: **Schulte, Johann, Dipl.-Ing. (FH)**
**Lindenstrasse 15**
**W-2991 Surwold(DE)**
Erfinder: **Viehmeyer, Volker**
**Hauptmannstrasse 29**
**W-4516 Bissendorf 1(DE)**

(74) Vertreter: **Rücker, Wolfgang, Dipl.-Chem. Patentanwalt**
**Bergiusstrasse 2b**
**W-3000 Hannover 51(DE)**

EP 0 268 029 B1

## Beschreibung

Die Erfindung betrifft ein Verfahren zur kontinuierlichen Bestimmung der Beschichtungsmenge von Silikon-Beschichtungen unter 2 g/m² auf einer fortlaufenden Bahn aus Papier, Karton oder Kunststoffolie innerhalb einer Beschichtungsanlage durch Messung des Glanzes der Oberfläche.

Bei der Beschichtung von Papier, Karton oder Kunststoffolie wird mit dem Ziel einer guten und konstanten Weiterverarbeitung der beschichteten Produkte sehr sorgfältig auf die Gleichmäßigkeit der jeweiligen Beschichtungsmenge geachtet. Aus wirtschaftlichen Gründen wird dabei oft auf eine gerade noch zulässige minimale Beschichtungshöhe je nach Verwendungszweck orientiert. Bei silikonbeschichteten Papieren oder Folien sind es u. a. die angestrebten Abhäsionseigenschaften, die die Beschichtungsmenge bestimmen.

Beispielsweise ist es möglich, mit Beschichtungsmengen von 0,6 bis 0,8 g/m² an Silikon bereits gute Trenneigenschaften gegenüber den üblichen Klebstoffsystemen zu erreichen. Dabei wird eine Streuungsbreite an Silikonauftrag in Längs- und Querrichtung der beschichteten Bahn von möglichst 0,1 g/m² oder weniger angestrebt, um keine zu starken Schwankungen in der Trennwirkung eintreten zu lassen.

Eine kontinuierliche Messung des Silikonauftrages innerhalb der Beschichtungsanlage wäre deshalb dringend erforderlich, um möglichst rasch in den Produktionsprozeß eingreifen zu können.

Eine "on-line"-Bestimmung der Silikonauftragsmenge wird bisher soweit bekannt noch nicht praktiziert.

Aus der Zeitschrift "Wochenblatt für Papierfabrikation" (Heft 6, 1969, S. 186 - 192) ist über Glanzmeßgeräte schlechthin und über den Glanz von Papieren referiert, wobei der Glanz jedoch nur an einer Stelle gemessen wird und die von verschiedenen Autoren beschriebenen Glanzarten erläutert sind.

Die US-A-3 732 016 beschreibt eine Vorrichtung zur Messung der Materialdicke im durchscheinenden Licht unter Verwendung einer Lichtquelle oberhalb des Materials und einer Fotozelle unterhalb des Materials, jeweils vor und nach einer Beschichtung.

Die US-A-2 246 501 beschreibt ein Glanzmeßgerät, bei dem das Papier über eine gekrümmte Fläche läuft, offensichtlich um Fehler im Papier zu ermitteln. Die Messung der Dicke einer Beschichtung ist an keiner Stelle erwähnt.

In der DE-A-34 23 708 wird zwar ein Verfahren zur "on-line"-Messung der Silikon-Beschichtungsanlage auf Papier oder Karton auf der Basis der Röntgen-Fluoreszenz-Analyse genannt. Dieses Verfahren ist zur "off-line"-Messung von Silikonbeschichtungen seit längerem bekannt und ermöglicht eine schnelle Bestimmung des beschichteten Materials in Form der Siliziummenge innerhalb von ca. zwei Minuten. Voraussetzung ist eine Messung des unbeschichteten Materials zum Vergleich, da dieses als Füllstoff siliziumhaltige Substanzen, wie z. B. Kaolin, Talkum oder Aluminiumsilikat enthalten kann. Röntgen-Fluoreszenz-Analysengeräte sind außerdem sehr teuer.

Eine "on-line"-Messung der Silikon-Beschichtungsmenge, wie in der oben genannten Druckschrift angeführt, ist aber nur dann möglich, wenn die Meßeinrichtung an einer beliebigen Stelle quer zur laufenden Bahn positioniert wird, da der zeitliche Abstand zwischen Einfall der Erregerstrahlung auf die laufende Bahn und die dadurch induzierte Fluoreszenzstrahlung berücksichtigt werden muß. Stärkere Schwankungen im Silikonauftrag in Quer- und Längsrichtung der Bahn können deshalb nur ungenügend erfaßt werden.

Es ist auch bekannt, den Polyethylenauftrag von extrudiertem Papier und Karton mttels Infrarotmessung "on-line" zu messen, wobei die Intensität bestimmter Absorptionsbanden ausgenutzt wird. Dabei handelt es sich jedoch um Beschichtungsmengen über 5, meist 10 g/m² oder mehr. Andere bekannte "on-line"-Meßverfahren, wie z. B. Betastrahlen (radiometrische Meßmethode - Meßgenauigkeit ± 0,2 %) zur Gewichtsmessung oder induktiv magnetisch (Meßgenauigkeit ± 0,2 %) zur Bestimmung der Dicke versagen ebenfalls bzw. erlauben keine präzise Aussage, sobald die Beschichtungsmenge unter 2 g/m², oft unter 1 g/m², wie bei der Silikonbeschichtung üblich, liegt.

Die meisten Silikonverarbeiter bestimmen deshalb den Silikonauftrag pro Quadratmeter über die Menge des verwendeten Silikonproduktes pro beschichteter Papieroberfläche. Eine Aussage über Verteilung in Längs- und Querrichtung der Bahn, einschließlich statistischer Aussagen über Streuung u. a. m., sind nicht möglich. Außerdem kommen diese wenigen Informationen viel zu spät, um noch regulierend auf den jeweiligen Beschichtungsprozeß eingreifen zu können ("Papier-und Kunststoff-Verarbeiter" (1982), Heft 2, Seiten 30 und 32).

Genauere analytische Bestimmungen für den Silikonauftrag, ebenfalls nur "off-line", erlauben folgende Nchweisverfahren:

- Saures Aufschlußverfahren mit gravimetrischer Ermittlung von SiO₂ (Zeitaufwand ca. 36 Stunden),
- Infrarot-Spektroskopie mittels FMIR-Technik (Nachteil, daß verschiedene Papiertypen auch verschiedene Reflexionszahlen aufweisen; dadurch muß für jedes Papier eine neue Eichkurve angefertigt werden) und
- Röntgen-Flureszenz-Analyse (Meßzeit ca. 2 Minuten).

Alle diese Analysenverfahren zur Ermittlung des Silikonauftrages genügen jedoch nicht den Forderungen der Beschichter nach einem "on-line"-Meß- und Steuerungssystem.

Es galt deshalb, ein Meßverfahren zu entwikkeln, das eine kontinuierliche Bestimmung des Beschichtungsauftrages, insbesondere von Silikonbeschichtungen auf der fortlaufenden Bahn aus Papier, Karton oder Kunststoffolie innerhalb von Beschichtungsanlagen ermöglicht. Dabei sollte nach Möglichkeit auch eine statistisch gesicherte Aussage über die Beschichtungsmenge in Längs- und Querrichtung der Bahn erfolgen.

Erfindungsgemäß wird das Problem dadurch gelöst, daß der Oberflächenglanz sowohl vor als auch nach der Beschichtung durch Ermittlung der jeweiligen Glanzspitzen bei einer Meßgeometrie von 20° bis 85° traversierend erfolgt und die separaten Ein- und Ausgangssignale der beiden getrennten Meßeinheiten zur Ermittlung der Glanzdifferenz als Glanzabfall oder Glanzzuwachs verwendet werden.

Zweckmäßigerweise sollte dabei die zweite Glanzmessung kurz vor dem Aufrollen der beschichteten Bahn erfolgen. Durch Anwendung der bereits genannten "off-line"-Analysenverfahen kann dabei anfangs die jeweilige Kombination von Trägerbahn und Beschichtungssystem den Glanzwerten vergleichend gegenübergestellt und dadurch eine Eichkurve aufgestellt werden.

Die Glanzmessung ist bereits seit längerem bekannt und wird auch zur meßtechnischen Erfassung und Kontrolle der Oberflächenbeschaffenheit unterschiedlicher unbeschichteter und beschichteter Materialien eingesetzt.

So ist z. B. auch die kontinuierliche Glanzmessung an laufenden Papierbahnen während der Arbeitsgänge, wie Kalandrieren, Streichen, Glätten, Wachsen oder Lackieren, üblich. Dabei wird aber stets nur der durch die genannten Arbeitsgänge erreichte "Veredelungsgrad" der Papieroberfläche, also der Grad der Einebnung von Oberflächenmarkierungen, als Glanzzahl gemessen.

Es existiert eine Vielfalt von Glanzmeßgeräten recht unterschiedlicher Meßgeometrien. International durchgesetzt haben sich Meßgeräte mit einer Meßgeometrie (Beleuchtungs-oder Beobachtungswinkel) von 0 bis 75°, wobei die Tappi-Norm mit 75° immer mehr Verbreitung findet. Das bedeutet einen kleinen Winkel von (90 - 75)° = 15° gegen die zu untersuchende Fläche. Alle Glanzmeßgeräte haben die Aufgabe, die Glanzspitze als Maß für die Stärke der Glanzerscheinung meßtechnisch zu erfassen, um daraus ein Glanzmaß zu errechnen (s. auch "Wochenblatt für Papierfabrikation" (1969), Heft 6, Seiten 186-192; Heft 10, Seiten 375-380; Heft 11/12, Seiten 448-458).

Die Anwendung der Glanzmessung zur Bestimmung der Beschichtungsmenge, insbesondere von Silikonaufträgen, scheiterte bisher an der fehlenden Erkenntnis von Zusammenhängen zwischen Glanz und aufgetragener Silikonmenge des beschichteten Materials. Für solche Meßwertvergleiche ist es z. B. erforderlich, den Silikonauftrag in Quer- und Längsrichtung der beschichteten Bahn wiederholt und reproduzierbar zu erfassen. Dazu müssen die bereits genannten sehr zeit- und kostenaufwendigen Analysenverfahren zur Siliziumverteilung, anhand der die Silikonverteilung erechnet werden kann, herangezogen werden.

Regressionsuntersuchungen im Rahmen der Erfindung ergaben überraschenderweise eine hohe Korrelation zwischen der Differenz der Glanzwerte vor und nach der Beschichtung, vor allem bei mit lösungsmittelfreien Silikonsystemen beschichteten Papieren und Silikonauftrag. Dadurch war die Voraussetzung zur kontinuierlichen "on-line"-Bestimmung des Silikonauftrages und sonstiger Beschichtungen durch Glanzmessungen gegeben.

Die Erfindung wird nun anhand von Beispielen näher erläutert:

Beispiel 1

Hochsatinierte gebleichte Silikonrohpapiere mit einer flächenbezogenen Masse von 67 g/m$^2$ und einer Oberflächenglätte nach Bekk zwischen 600 und 1200 s wurden mit lösungsmittelfreien Silikonsystemen auf einer Technikumsanlage unter variierten Auftragsbedingungen, wie z. B. Viskosität des Silikonsystems, Geschwindigkeit und Anpreßdruck, beschichtet.

An dem Rohpapier vom Typ AV 100 (AV = geeignet für additionsvernetzte Silikonsysteme) erfolgt vor und nach der Silikonisierung stationär die Glanzmessung nach Tappi-Norm, also unter 75°.

Der Silikonauftrag wurde mittels Röntgen-Fluoreszenz-Analyse mehrfach über die beschichtete Bahn bestimmt.

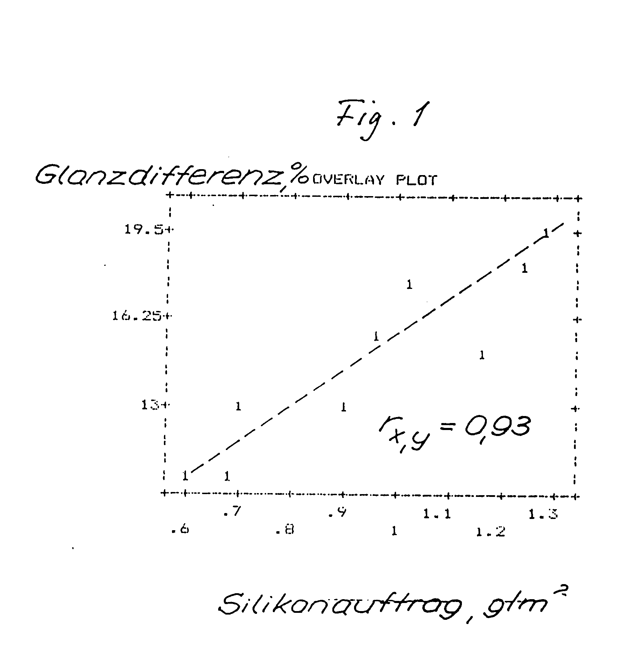

In der Fig. 1 ist der Zusammenhang zwischen Glanzdifferenz, aufgetragen auf der Ordinate, und Silikonauftrag auf der Abszisse bei Verwendung eines lösungsmittelfreien additionsvernetzenden Silikonsystems vom Typ B (bekannt unter dem handelsnamen "Syl-Off" der Firma Dow Corning) dargestellt.

Jeder der in der Figur gezeigten Meßpunkte stellt den arithmetischen Mittelwert von mindestens je drei Meßwerten von Glanz und Silikonauftrag dar.

Der mit Hilfe der mathematischen Statistik errechnete lineare Korrelationskoeffizient von 0,93 weist auf einen relativ hohen statistisch gesicherten Zusammenhang zwischen Glanzdifferenz und Silikonauftrag hin.

## Beispiel 2

Das Silikonrohpapier gemäß Beispiel 1 wurde mit einem lösungsmittelfreien additionsvernetzenden Silikonsystem vom Typ A ("Si-Dehäsiv" der Firma Wacker) beschichtet und analog Beispiel 1 die Messung von Glanz und Silikonauftrag vorgenommen.

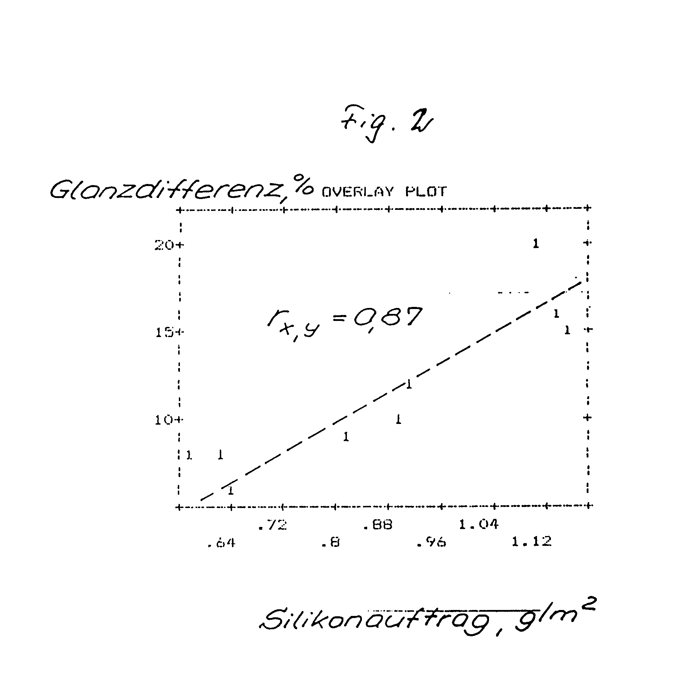

In Fig. 2 ist der Zusammenhang zwischen Glanzdifferenz und Silikonauftrag dargestellt. Der lineare Korrelationskoeffizient mit 0,87 weist wiederum auf einen relativ hohen statistisch gesicherten Zusammenhang zwischen Glanzdifferenz und Silikonauftrag hin.

Bei Verwendung eines lösungsmittelhaltigen addtionsvernetzenden Silikonsystems betrug der lineare Korrelationskoeffizient-0,77.

Das negative Vorzeichen weist darauf hin, daß durch den Silikonauftrag in diesem Fall ein Glanzabfall und keine Glanzzunahme erfolgte. Ein statistisch gesicherter Zusammenhang zwischen Glanz und Silikonauftrag ist demnach auch bei Verwendung eines lösungsmittelhaltigen Silikonsystems gegeben.

## Beispiel 3

Auf der Grundlage der Beispiele 1 und 2 wurde der generelle Zusammenhang zwischen Glanz (als Glanzdifferenz) und Silikonauftrag unter Einbeziehung verschiedener lösungsmittelfreier Silikonsysteme untersucht.

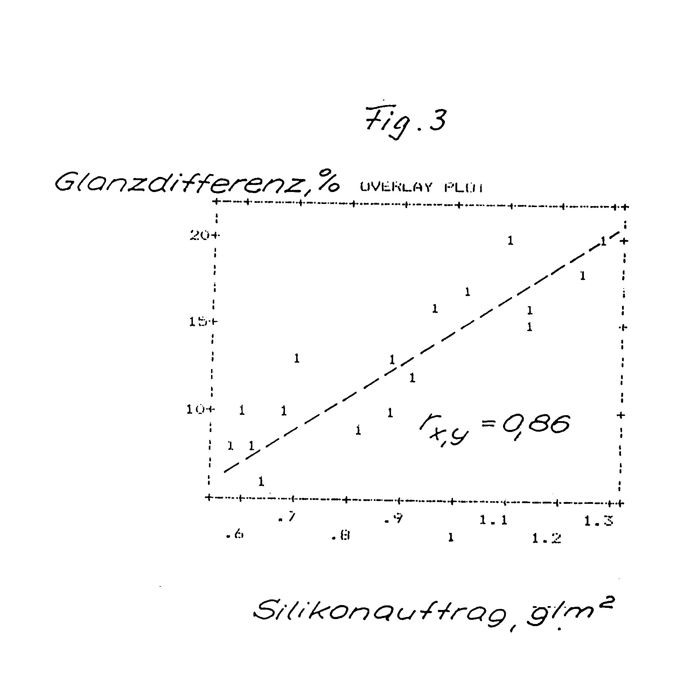

Die Ergebnisse sind in der Fig. 3 für verschiedene lösungsmittelfreie additionsvernetzende Systeme dargestellt.

Der ermittelte lineare Korrelationskoeffizient von 0,86 für verschiedene lösungsmittelfreie additionsvernetzende Silikonsysteme belegt, daß unabhängig von der chemischen Zusammensetzung ein guter Zusammenhang zwischen Glanzdifferenz und Silikonauftrag existiert.

Auf der Grundlage dieser Ergebnisse ist es nun möglich, den Silikonauftrag "on-line" durch kontinuierliche Glanzmessungen an der laufenden Bahn zu bestimmen. Dazu ist es erforderlich, zwei oder mehr getrennte Meßeinheiten mit separaten Ein- und Ausgangssignalen zu verwenden, die eine traversierende Glanzmessung vor und nach der Beschichtung gestatten. Die Glanzmessung am beschichteten Material sollte möglichst nach abgeschlossener Trocknung und evtl. Konditionierung, also kurz vor dem Aufrollen der Bahn, erfolgen.

Das Prinzip der Messung der Glanzdifferenz zur indirekten Erfassung der Beschichtungsmenge ist auch für andere Beschichtungssysteme, z. B. für dünne Lackaufträge, funktionelle Beschichtungen unterschiedliche Art u. a. m. denkbar. Unter Heranziehung der verschiedenen Ausgangssignale und deren Verarbeitung in einem Computer ist es generell möglich, die Glanzdifferenz als Längs- und Querprofil der beschichteten Bahn darzustellen. Gegebenenfalls kann das System auch zu einem integrierten Prozeßerfassungs- und -steuerungssystem erweitert werden, wodurch ein sofortiger Eingriff in den Beschichtungsprozeß möglich wird.

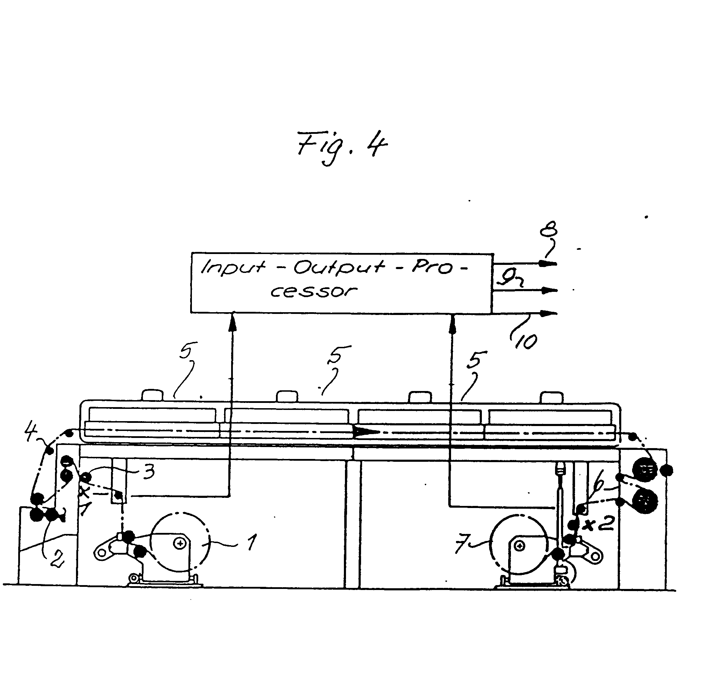

Das Blockschaltbild dieses Meß- und Steuerungssystems ist aus Fig. 4 ersichtlich.

In dieser Figur ist eine Beschichtungsanlage für Silikonsysteme der in Rede stehenden Art in schematischer Weise dargestellt. Der zu beschichtende Papiervorrat befindet sich auf der Rolle 1, von der die Papierbahn abgezogen wird und dabei über verschiedene Rollensysteme und das Silikonauftragswerk 2 läuft.

Die Glanzabtastung der unbeschichteten Bahn erfolgt bei X1 im Scheitelpunkt der Rolle 3. Die Bahn 4, die nun mit einer silikonhaltigen Masse, die in der vorangegangenen Beschreibung auch mit System bezeichnet ist, beschichtet ist, läuft durch die Trockungsvorrichtungen 5 über ein Rollensystem 6 mit einer zweiten Glanzabtastvorrichtung X2 und wird auf die Rolle 7 aufgewickelt.

Aus der Differenz zwischen den Meßwerten X1 und X2 wird dann in der oben beschriebenen Weise die Menge pro Quadratmeter aufgetragener Silikonmischung bestimmt.

Der Pfeil 8 führt ein Signal zu einem Bildschirm, Pfeil 9 zu einem Drucker und Pfeil 10 zu einem Regelsystem.

## Patentansprüche

1. Verfahren zur kontinuierlichen Bestimmung der Beschichtungsmenge von Silikon-Beschichtungen unter 2 g/m$^2$ auf einer fortlaufenden Bahn aus Papier, Karton oder Kunststoffolie innerhalb einer Beschichtungsanlage durch Messung des Glanzes der Oberfläche, **dadurch gekennzeichnet,** daß der Oberflächenglanz sowohl vor als auch nach der Beschichtung durch Ermittlung der jeweiligen Glanzspitzen bei einer Meßgeometrie von 20° bis 85° traversierend erfolgt und die separaten Ein- und Ausgangssignale der beiden getrennten Meßeinheiten zur Ermittlung der Glanzdifferenz als Glanzabfall oder Glanzzuwachs verwendet werden.

2. Verfahren nach Anspruch 1, **dadurch gekennzeichnet,** daß die Glanzmessung nach DIN-, ASTM- oder Tappi-Norm bei einer Meßgeometrie (Beleuchtungs- oder Beobachtungswinkel) von 20° bis 85° erfolgt.

3. Verfahren nach Anspruch 1 und 2, **dadurch**

**gekennzeichnet,** daß die Glanzmessung kontinuierlich erfolgt, wobei die on-line-Messung traversierend, also quer zur fortlaufenden Bahn, erfolgt und dadurch Glanzwerte in Längs- und Querrichtung der fortlaufenden Bahn erhalten werden.

4. Verfahren nach Anspruch 1 bis 3, **dadurch gekennzeichnet,** daß die Glanzmessung berührungslos direkt an den Achsen von Umlenkrollen vor und nach der Beschichtung erfolgt.

5. Verfahren nach Anspruch 1 bis 4, **dadurch gekennzeichnet,** daß die Glanzmessung nach der Beschichtung erst nach abgeschlossener Trocknung und evtl. Konditionierung der beschichteten Bahn durchgeführt wird.

6. Verfahren nach Anspruch 1 bis 5, **dadurch gekennzeichnet,** daß das die Glanzdifferenz darstellende Signal zur Kontrolle und Steuerung der Beschichtungsmenge und -gleichmäßigkeit verwendet wird.

**Claims**

1. A method of continuously determining the coating quantity of silicone coatings below 2 $g/m^2$ on a continuous web of paper, cardboard or synthetic plastics film within a coating installation by measuring the gloss of the surface, characterised in that both before and also after coating, the surface gloss is measured by ascertaining the respective gloss peaks at a measurement geometry of 20° to 85° in a traversing movement, the separate input and output signals for the two separate measuring units being used to ascertain the gloss differential as a reduction or increase in gloss.

2. A method according to Claim 1, characterised in that gloss measurement is carried out according to DIN, ASTM or Tappi standards at a measurement geometry (angles of illumination or observation) of 20° to 85°.

3. A method according to Claim 1 and 2, characterised in that gloss measurement takes place continuously, the on-line measurement being carried out with a traversing action, in other words cross-wise to the moving web, so that gloss values are obtained in the longitudinal and transverse directions of the moving web.

4. A method according to Claim 1 to 3, characterised in that the measurement of gloss occurs without contact, directly at the spindles of direction-reversing rollers before and after the coating process.

5. A method according to Claim 1 to 4, characterised in that gloss measurement following coating takes place only after the conclusion of drying and possibly conditioning of the coated web.

6. A method according to Claim 1 to 5, characterised in that the signal constituting the gloss differential is used for monitoring and controlling the quantity and evenness of coating.

**Revendications**

1. Procédé de détermination en continu de la quantité de revêtement des revêtements de silicone inférieurs à 2 $g/m^2$ sur une bande de papier, de carton ou de feuilles de plastique en mouvement dans une installation d'enduction par mesure de la brillance de la surface, caractérisé en ce que la brillance de la surface est déterminée avant et après l'enduction en mesurant les pointes de brillance avec une géométrie de mesure de 20 à 85° et en ce que les signaux d'entrée et de sortie des deux unités de mesure séparées sont utilisés pour déterminer la différence de brillance, sous forme de perte de brillance ou de gain de brillance.

2. Procédé selon la revendication 1, caractérisé en ce que la mesure de brillance est effectuée suivant la norme DIN, ASTM ou Tappi, avec une géométrie de mesure de 20° à 85° (angle d'éclairement ou d'observation).

3. Procédé selon les revendications 1 et 2, caractérisé en ce que la mesure de brillance est effectuée en continu tandis que la mesure en ligne est effectuée transversalement, c'est-à-dire transversalement par rapport à la bande en mouvement, et permet d'obtenir ainsi des valeurs de brillance en directions longitudinale et transversale de la bande en mouvement.

4. Procédé selon les revendications 1 à 3, caractérisé en ce que la mesure de brillance est effectuée sans contact, directement aux axes des rouleaux de renvoi, avant et après l'enduction.

5. Procédé selon les revendications 1 à 4, caractérisé en ce que la mesure de brillance est effectuée après l'achèvement du séchage et éventuellement du conditionnement de la bande revêtue.

**6.** Procédé selon les revendications 1 à 5, caractérisé en ce que le signal représentant la différence de brillance est utilisé pour le contrôle et la commande de la quantité de revêtement et de son uniformité.

Fig. 1

Fig. 2

Fig.3

Glanzdifferenz,%  OVERLAY PLOT

$r_{x,y} = 0{,}86$

Silikonauftrag, g/m²

Fig. 4